# EUROPEAN PATENT SPECIFICATION

(11) **EP 2 638 117 B1**
(45) Date of publication and mention of the grant of the patent: **23.09.2015**
(21) Application number: 11785870.4
(22) Date of filing: 07.11.2011
(51) Int. Cl.: C09D 183/08, C09D 183/14, C09D 4/00

(54) **SURFACE TREATMENT PROCESS, COMPOSITION FOR USE THEREIN, AND TREATED ARTICLE**
OBERFLÄCHENBEHANDLUNGSVERFAHREN, ZUSAMMENSETZUNG ZUR VERWENDUNG DARIN UND BEHANDELTER ARTIKEL
PROCÉDÉ DE TRAITEMENT DE SURFACE, COMPOSITION À UTILISER DANS CE PROCÉDÉ ET ARTICLE TRAITÉ

(30) Priority: 10.11.2010 US 412106 P
(43) Date of publication of application: 18.09.2013
(73) Proprietor: 3M Innovative Properties Company, Saint Paul, MN 55133-3427 (US)
(72) Inventor: IYER, Suresh S., Saint Paul, Minnesota 55133-3427 (US); RAJAGOPAL, Rama V., Singapore 768923 (SG)
(74) Representative: Herzog, Fiesser & Partner Patentanwälte PartG mbB
(86) International application number: PCT/US2011/059585
(87) International publication number: WO 2012/064653

(56) References cited:
- EP-A1- 0 611 771
- US-A1- 2004 092 675
- US-A1- 2004 125 169
- US-A1- 2008 063 859
- US-A1- 2009 214 809
- US-B1- 6 277 485
- US-B1- 6 451 432
- US-B1- 6 613 860
- US-B1- 7 294 731
- US-B2- 7 235 683
- DATABASE WPI Week 200465 Thomson Scientific, London, GB; AN 2004-664086 XP002667624, -& JP 2004 252147 A (RICOH KK) 9 September 2004 (2004-09-09)
- DATABASE WPI Week 198742 Thomson Scientific, London, GB; AN 1987-298087 XP002667625, -& SU 1 299 993 A (KIEV POLY) 30 March 1987 (1987-03-30)
- NAKAGAWA T ET AL: "Water-repellent thin films from mixtures of fluoroalkylmethoxysilane and bis-(trialkoxysilyl)alkanes of various carbon-chain lengths using the sol-gel method and the fluoroalkylmethoxysilane dispersion mechanism", JOURNAL OF NON-CRYSTALLINE SOLIDS, NORTH-HOLLAND PHYSICS PUBLISHING. AMSTERDAM, NL, vol. 316, no. 2-3, 1 February 2003 (2003-02-01), pages 228-237, XP004402042, ISSN: 0022-3093, DOI: 10.1016/S0022-3093(02)01796-9

## Description

### FIELD

This invention relates to methods of treating substrates (especially substrates having a hard surface such as, for example, ceramics or glass) to impart water, oil, stain, and/or dirt repellency to a surface thereof, and, in other aspects, this invention relates to compositions for use in the methods and to substrates treated thereby.

### BACKGROUND

Various fluorochemical compositions have been used as coating compositions for application to substrates (for example, hard surface substrates and fibrous substrates) to impart low surface energy characteristics such as oil and/or water repellency (oleophobicity and/or hydrophobicity). When used in coatings or films, however, many fluorochemical materials have tended to diffuse to the surface of the coating or film and to become depleted over time (for example, due to repeated cleanings of the surface). This has led to the use of fluorochemical derivatives having reactive or functional groups (for example, perfluoropolyether thiols, silanes, phosphates, and acrylates) to enable covalent attachment to the coatings, films, or substrate surfaces.

Silane compounds having one or more fluorochemical groups have been used (alone and in combination with other materials) to prepare surface treatment compositions for substrates such as glass and ceramics. Such silane compounds have typically included one or more hydrolyzable groups and at least one polyfluorinated alkyl or polyether group.

Numerous fluorochemical surface treatments have been developed and have varied in their ease of applicability to substrates (for example, due to differences in viscosity and/or in solvent solubilities, some treatments even requiring expensive vapor deposition or multiple application steps), in their requisite curing conditions (for example, some requiring relatively high curing temperatures for relatively long periods of time), in their repellency levels, in their ease of cleaning, in their degrees of optical clarity, and/or in their durability (for example, in their chemical resistance, abrasion resistance, and/or solvent resistance). Many have also been at least somewhat substrate-specific, requiring production of multiple compositions to ensure adhesion to different substrates.

US 7,294,731 B1 describes perfluoropolyether silanes, compositions containing the perfluoropolyether silanes and method of treating substrates, in particular substrates having a hard surface such as ceramics or glass, to render them water, oil, stain, and/or dirt repellent.

### SUMMARY

Thus, we recognize that there exists an ongoing need for surface treatment processes (and fluorochemical compositions for use therein) that can meet the performance requirements of a variety of different surface treatment applications. Such processes will preferably be simple, cost-effective, compatible with existing manufacturing methods, and/or capable of imparting repellency (preferably, durable, tailored repellency) to a variety of different substrates.

Briefly, in one aspect, this invention provides a surface treatment process. The process comprises
(a) providing at least one substrate having at least one major surface;
(b) providing a curable surface treatment composition comprising
   (1) at least one fluorinated organosilane compound comprising (i) a monovalent segment being a polyfluoropolyether, and (ii) a monovalent endgroup comprising at least one silyl moiety comprising at least one group selected from hydroxyl, hydrolyzable groups, and combinations thereof (hereinafter, termed a "monopodal" fluorinated organosilane compound, due to the presence of a single endgroup (comprising one or more silyl moieties)),
   (2) optionally, at least one fluorinated organosilane compound comprising (i) a multivalent (preferably, divalent) segment being a polyfluoropolyether and (ii) at least two monovalent endgroups, each monovalent endgroup independently comprising at least one silyl moiety comprising at least one group selected from hydroxyl, hydrolyzable groups, and combinations thereof (hereinafter, termed a "multipodal" fluorinated organosilane compound, due to the presence of multiple endgroups (each comprising one or more silyl moieties)), and
   (3) at least one organosilane compound comprising (i) a multivalent (preferably, divalent) non-fluorinated segment (for example, oxy, hydrocarbyl, heteroatom-containing hydrocarbyl, siloxanyl, or a combination thereof) and (ii) at least two monovalent endgroups, each monovalent endgroup independently comprising at least one silyl moiety comprising at least one group selected from hydroxyl, hydrolyzable groups, and combinations thereof, and/or at least one organosilazane compound (hereinafter, termed "multipodal" organosilane and organosilazane compounds);
   (4) at least one organic solvent comprising a hydrofluorother; and
(c) applying the curable surface treatment composition to at least a portion of at least one major surface of the substrate; and
(d) curing the applied, curable surface treatment composition to form a surface treatment.

The monovalent segment of the fluorinated organosilane compound is a perfluoropolyether.

It has been discovered that effective surface treatment compositions can be prepared by combining fluorinated monopodal organosilanes with multipodal (preferably, bipodal) organosilanes and/or organosilazanes. The resulting compositions can be cured to form crosslinked networks that exhibit low surface energy characteristics. The monopodal and multipodal components can be applied to a surface sequentially (in either order) and then cured, but, preferably, the monopodal and multipodal components can be combined to form a mixture that is then applied to a substrate surface. Surprisingly, crosslinked networks formed by application and curing of such pre-formed mixtures can exhibit synergistically enhanced low surface energy characteristics (for example, significantly higher water contact angles), relative to crosslinked networks formed by sequential application of the components or by application of the fluorinated component alone.

The properties of the crosslinked networks can be tailored to the requirements of various different applications by varying the nature and relative amount of the monopodal fluorinated organosilane and the nature and relative amount of the multipodal organosilane and/or organosilazane. In particular, the organofluorine or heteroorganofluorine content of the monopodal fluorinated organosilane compound can be used to modify or tune the surface properties of the crosslinked networks for use in applications where the presence of fluorine can be advantageous (for example, applications requiring certain low surface energy characteristics).

Surprisingly, the use of as little as 0.45 weight percent of the monopodal fluorinated organosilane compound (based upon the total weight of the surface treatment composition) as the sole fluorinated component of the composition can provide useful low surface energy characteristics in the crosslinked networks, in spite of the relatively high non-fluorinated content of the composition. The crosslinked networks can exhibit, for example, advancing contact angles as high as 135 degrees with water and as high as 85 degrees with hexadecane. The surface treatment compositions can be more cost effective than conventional fluorochemical surface treatments (for example, those having greater fluorinated content) and yet can be used to impart a relatively high degree of hydrophobicity and/or oleophobicity to a variety of substrates (for example, for surface protection or to enhance ease of cleaning).

The curable surface treatment compositions can be coated in neat form or, preferably, can be dissolved in any of a variety of solvents (including both fluorochemical and non-fluorochemical solvents) and then coated on desired substrates. The coated compositions can be cured by application of heat (for example, temperatures of 150°C for 30 minutes can be useful) to provide relatively highly crosslinked, relatively thin (for example, less than 500 nanometers (nm) in thickness), relatively optically clear hardcoats. In addition to the low surface energy characteristics of the hardcoats (for example, water, oil, ink, and/or stain repellency and anti-smudge and anti-graffiti properties), the hardcoats can exhibit ultraviolet transparency, corrosion resistance, thermal stability, fire resistance, chemical resistance, wear and abrasion resistance.

The hardcoats can exhibit adhesion to a variety of different substrates (for example, glass, wood, metal, and ceramics). Surprisingly, relatively durable repellency characteristics can be imparted to the substrates (especially substrates having siliceous surfaces) by using relatively simple application methods (for example, applying by dip coating or spray coating and then curing).

Thus, at least some embodiments of the process of the invention meet the above-described, ongoing need for treatment processes (and fluorochemical compositions for use therein) that can fulfill the performance requirements of a variety of different surface treatment applications, while preferably being simple, cost-effective, compatible with existing manufacturing methods, and/or capable of imparting repellency (preferably, durable, tailored repellency) to a variety of different substrates. The hardcoats (with their often outstanding durability, adhesion, and repellency properties) can be widely used for applications requiring durable low surface energy characteristics (for example, anti-graffiti coatings for signs, buildings, transportation vehicles, and the like; easily cleanable and/or anti-smudge coatings for metals, ceramic tiles, electronic devices, optical devices, and the like; mold release coatings for polymer or composite molding).

In another aspect, this invention also provides a surface-treated article comprising at least one substrate having at least one major surface, the substrate bearing, on at least a portion of at least one of the major surfaces, a surface treatment prepared by the above-described process of the invention.

In yet another aspect, this invention further provides a surface treatment composition comprising
(a) at least one fluorinated organosilane compound comprising (1) a monovalent segment being a polyfluoropolyether and (2) a monovalent endgroup comprising at least one silyl moiety comprising at least one group selected from hydroxyl, hydrolyzable groups, and combinations thereof; and
(b) at least one organosilane compound comprising (1) a multivalent (preferably, divalent) non-fluorinated segment selected from olefinic hydrocarbyl (preferably, alkenylene), alicyclic hydrocarbyl (preferably, cycloalkylene), heteroatom-containing hydrocarbyl (for example, comprising one or more catenated heteroatoms), siloxanyl (for example, polydiorganosiloxane), and combinations thereof and (2) at least two monovalent endgroups, each monovalent endgroup independently comprising at least one silyl moiety comprising at least one group selected from hydroxyl, hydrolyzable groups, and combinations thereof, and/or at least one organosilazane compound; and
(c) an organic solvent comprising a hydrofluoropolyether.

### DETAILED DESCRIPTION

In the following detailed description, various sets of numerical ranges (for example, of the number of carbon atoms in a particular moiety, of the amount of a particular component, or the like) are described, and, within each set, any lower limit of a range can be paired with any upper limit of a range. Such numerical ranges also are meant to include all numbers subsumed within the range (for example, 1 to 5 includes 1, 1.5, 2, 2.75, 3, 3.80, 4, 5, and so forth).

As used herein, the term "and/or" means one or all of the listed elements or a combination of any two or more of the listed elements.

The words "preferred" and "preferably" refer to embodiments of the invention that may afford certain benefits under certain circumstances. Other embodiments may also be preferred, however, under the same or other circumstances. Furthermore, the recitation of one or more preferred embodiments does not imply that other embodiments are not useful, and is not intended to exclude other embodiments from the scope of the invention.

The term "comprises" and variations thereof do not have a limiting meaning where these terms appear in the description and claims.

As used herein, "a," "an," "the," "at least one," and "one or more" are used interchangeably.

The above "Summary of the Invention" section is not intended to describe every embodiment or every implementation of the invention. The detailed description that follows more particularly describes illustrative embodiments. Throughout the detailed description, guidance is provided through lists of examples, which examples can be used in various combinations. In each instance, a recited list serves only as a representative group and should not be interpreted as being an exclusive list.

### Definitions

As used in this patent application:
"carbonyl" means a divalent group of formula -(CO)-;
"carbonylimino" means a divalent group or moiety of formula -(CO)NR-, where R is hydrogen, alkyl (for example, selected from alkyl groups having from one to four carbon atoms), or aryl;
"carbonyloxy" means a divalent group or moiety of formula -(CO)O-;
"catenated heteroatom" means an atom other than carbon (for example, oxygen, nitrogen, or sulfur) that replaces one or more carbon atoms in a carbon chain (for example, so as to form a carbon-heteroatom-carbon chain or a carbon-heteroatom-heteroatom-carbon chain);
"cure" means conversion to a crosslinked polymer network (for example, through application of heat and/or moisture);
"fluoro-" (for example, in reference to a group or moiety, such as in the case of "fluoroalkylene" or "fluoroalkyl" or "fluorocarbon") or "fluorinated" means only partially fluorinated such that there is at least one carbon-bonded hydrogen atom;
"fluorochemical" means fluorinated or perfluorinated;
"heteroorganic" means an organic group or moiety (for example, an alkyl or alkylene group) containing at least one heteroatom (preferably, at least one catenated heteroatom);
"hydrolyzable" (in reference to a group or moiety) means cleavable or removable from the atom to which it is bonded by action of liquid water having a pH of 1 to 10 under conditions of atmospheric pressure;
"hydroxysilyl" refers to a monovalent moiety or group comprising a silicon atom directly bonded to a hydroxyl group (for example, the hydroxysilyl moiety can be of formula -Si(R)₃₋ₚ(OH)ₚ where p is an integer of 1, 2, or 3 and R is a hydrolyzable or non-hydrolyzable group);
"imino" means a divalent group of formula -N(R)-, wherein R is hydrogen, alkyl (for example, selected from alkyl groups having from one to four carbon atoms), or aryl (preferably, hydrogen);
"iminocarbonylimino" means a divalent group or moiety of formula -N(R)-C(O)-N(R)-, wherein R is hydrogen, alkyl (for example, selected from alkyl groups having from one to four carbon atoms), or aryl;
"nitrilo" means trivalent nitrogen;
"oligomer" means a molecule that comprises at least two repeat units and that has a molecular weight less than its entanglement molecular weight; such a molecule, unlike a polymer, exhibits a significant change in properties upon the removal or addition of a single repeat unit;
"oxy" means a divalent group of formula -O-;
"oxycarbonylimino" means a divalent group or moiety of formula -O-C(O)-N(R)-, wherein R is hydrogen, alkyl (for example, selected from alkyl groups having from one to four carbon atoms), or aryl;
"oxycarbonyloxy" means a divalent group or moiety of formula -O(CO)O-;
"perfluoro-" (for example, in reference to a group or moiety, such as in the case of "perfluoroalkylene" or "perfluoroalkyl" or "perfluorocarbon") or "perfluorinated" means completely fluorinated such that, except as may be otherwise indicated, there are no carbon-bonded hydrogen atoms replaceable with fluorine;
"perfluoroether" means a group or moiety having two saturated or unsaturated perfluorocarbon groups (linear, branched, cyclic (preferably, alicyclic), or a combination thereof) linked with an oxygen atom (that is, there is one catenated oxygen atom);
"perfluoropolyether group (or segment or moiety)" means a group or moiety having three or more saturated or unsaturated perfluorocarbon groups (linear, branched, cyclic (preferably, alicyclic), or a combination thereof) linked with oxygen atoms (that is, there are at least two catenated oxygen atoms);
"polyfluoro" (for example, in reference to a group or moiety, such as in the case of "polyfluoroalkyl" or "polyfluoropolyether" or "polyfluorocarbon") means fluorinated or perfluorinated;
"siloxanyl" means a group or moiety that has at least one Si-O-Si bond;
"sulfinyl" means a divalent group of formula -SO-;
"sulfonyl" means a divalent group of formula -SO₂-;
"sulfonylimino" means a divalent group or moiety of formula -SO₂N(R)-, wherein R is hydrogen, alkyl (for example, selected from alkyl groups having from one to four carbon atoms), or aryl; and
"thio" means a divalent group of formula -S-.

### Fluorinated Organosilane Compounds

Fluorinated organosilane compounds that are suitable for use in the process of the invention include those monopodal fluorinated organosilane compounds that comprise (a) a monovalent segment being a polyfluoropolyether and (b) a monovalent endgroup comprising at least one silyl moiety (preferably, one to 20; more preferably, one to 5; most preferably, one or two) comprising at least one group selected from hydrolyzable groups, hydroxyl, and combinations thereof. Suitable optional fluorinated organosilane compounds (which can be used in combination with the foregoing monopodal fluorinated organosilane compounds, if desired) include those multipodal fluorinated organosilane compounds that comprise (a) a multivalent (preferably, divalent) segment being a polyfluoropolyether and (b) at least two monovalent endgroups, each monovalent endgroup comprising at least one silyl moiety (preferably, one to 20; more preferably, one to 5; most preferably, one or two) comprising at least one group selected from hydrolyzable groups, hydroxyl, and combinations thereof.

The monopodal fluorinated organosilane compounds can be used alone or, optionally, in combination with the multipodal fluorinated organosilane compounds in carrying out the process of the invention, as described above. When the monovalent and/or multivalent segments of the compounds are fluorinated rather than perfluorinated, preferably not more than one atom of hydrogen is present for every two carbon atoms in the segment.

The monovalent and/or multivalent segments of the fluorinated organosilane compounds are preferably perfluorinated. The monovalent segment of the monopodal compounds is a perfluoropolyether, and/or the multivalent segment of the multipodal compounds is a perfluoropolyether.

A class of the monopodal fluorinated organosilane compounds includes those that can be represented by the following general formula:

R*_{f}*-Q-[C(R)₂-Si(Y)₃₋ₓ(R^{1a})ₓ]_{y} I

wherein R*_{f}* is a monovalent segment that is a polyfluoropolyether; Q is a divalent or trivalent linking group (preferably, a covalent bond or an organic or heteroorganic divalent or trivalent linking group (preferably, divalent)); each R is independently hydrogen or a C₁₋₄ alkyl group (preferably, hydrogen); each Y is independently hydroxyl, a hydrolyzable group, or a combination thereof; each R^{1a} is independently a non-hydrolyzable group (preferably, Q₁₋₈ alkyl, phenyl, or a combination thereof; more preferably, C₁₋₂ alkyl, phenyl, or a combination thereof; most preferably, C₁₋₂ alkyl or a combination thereof); each x is independently an integer of 0, 1, or 2 (preferably, 0); and y is an integer of 1 or 2 (preferably, 1).

A class of the optional multipodal fluorinated organosilane compounds includes those that can be represented by the following general formula:

R'*_{f}*[Q-[C(R)₂-Si(Y)₃₋ₓ(R^{1a})ₓ]_{y}]_{z} II

wherein R'*_{f}* is a z-valent segment that is a polyfluoropolyether; each Q is independently a divalent or trivalent linking group (preferably, a covalent bond or an organic or heteroorganic divalent or trivalent linking group (preferably, divalent)); each R is independently hydrogen or a C₁₋₄ alkyl group (preferably, hydrogen); each Y is independently hydroxyl, a hydrolyzable group, or a combination thereof; each R^{1a} is independently a non-hydrolyzable group (preferably, C₁₋₈ alkyl, phenyl, or a combination thereof; more preferably, C₁₋₂ alkyl, phenyl, or a combination thereof; most preferably, C₁₋₂ alkyl or a combination thereof); each x is independently an integer of 0, 1, or 2 (preferably, 0); each y is independently an integer of 1 or 2 (preferably, 1); and z is an integer of 2, 3, or 4 (preferably, 2).

Preferably, R*_{f}* and/or R'*_{f}* are a perfluoropolyether group comprising at least four perfluorinated carbon atoms; even more preferably, a perfluoropolyether group comprising at least four perfluorinated carbon atoms. Preferably, R*_{f}* and/or R'*_{f}* (which can be saturated or unsaturated; preferably, saturated) contain from 4 to 35 perfluorinated carbon atoms (more preferably, from 6 or 8 or 9 to 25 perfluorinated carbon atoms; most preferably, from 10 to 17, 18, or 20 perfluorinated carbon atoms).

Preferred R*_{f}* and/or R'*_{f}* groups include perfluoropolyether groups or segments that can be linear, branched, cyclic (preferably, alicyclic), or a combination thereof. The perfluoropolyether group or segment can be saturated or unsaturated (preferably, saturated). Representative examples of useful perfluoropolyether groups include, but are not limited to, those that have perfluorinated repeating units selected from --(CₚF₂ₚ)--,-(CₚF₂ₚO)--, --(CF(Z))--, --(CF(Z)O)--, --(CF(Z)CₚF₂ₚO)--, --(CₚF₂ₚCF(Z)O)--,-(CF₂CF(Z)O)--, and combinations thereof, wherein p is an integer of 1 to 10 (preferably, 1 to 8; more preferably, 1 to 6; even more preferably, 1 to 4; most preferably, 1 to 3); Z is selected from perfluoroalkyl, perfluoroether, perfluoropolyether, and perfluoroalkoxy groups (and combinations thereof) that are linear, branched, cyclic, or a combination thereof and that have less than or equal to 12 carbon atoms (preferably, less than or equal to 10 carbon atoms; more preferably, less than or equal to 8 carbon atoms; even more preferably, less than or equal to 6 carbon atoms; still more preferably, less than or equal to 4 carbon atoms; most preferably, less than or equal to 3 carbon atoms) and/or less than or equal to 4 oxygen atoms (preferably, less than or equal to 3 oxygen atoms; more preferably, less than or equal to 2 oxygen atoms; most preferably, zero or one oxygen atom). In these perfluoropolyether structures, different repeating units can be combined in a block, alternating, or random arrangement to form the perfluoropolyether group.

Favorably, the polyfluoropolyether segment comprises perfluorinated repeating units selected from the group consisting of -(CₚF₂ₚO)-, -(CF(Z)O)-, -(CF(Z)CₚF₂ₚO)-,-(CₚF₂ₚCF(Z)O)-, -(CF₂CF(Z)O)-, and combinations thereof; and more favorably perfluorinated repeating units selected from the group consisting of -(CₚF₂ₚO)-,-(CF(Z)O)-, and combinations thereof. For certain of these embodiments, p is an integer from 1 to 4; or 1 to 3; or 1 or 2. For certain of these embodiments, Z is a -CF₃ group.

When the perfluoropolyether group or segment is monovalent, its terminal group can be (CₚF₂ₚ₊₁)-- or (CₚF₂ₚ₊₁O)--, for example, wherein p is as defined in the above paragraphs. Representative examples of useful monovalent perfluoropolyether groups or segments include, but are not limited to, C₃F₇O(CF(CF₃)CF₂O)ₙCF(CF₃)--, C₃F₇O(CF(CF₃)CF₂O)ₙCF₂CF₂--, C₃F₇O(CF₂CF₂CF₂O)ₙCF₂CF₂--, C₃F₇O(CF₂CF₂CF₂O)ₙCF(CF₃)--, CF₃O(C₂F₄O)ₙCF₂--, CF₃O(CF₂O)ₙ(C₂F₄O)_{q}CF₂--, F(CF₂)₃O(C₃F₆O)_{q}(CF₂)₃--, and CF₃O(CF₂CF(CF₃)O)ₙ(CF₂O)X- (wherein X is CF₂-, C₂F₄-, C₃F₆-, or C₄F₈-) (wherein n has an average value of 0 to 50, 1 to 50, 3 to 30, 3 to 15, or 3 to 10; and q has an average value of 0 to 50, 3 to 30, 3 to 15, or 3 to 10).

Representative examples of useful divalent perfluoropolyether groups or segments include, but are not limited to, --CF₂O(CF₂O)ₙ(C₂F₄O)_{q}CF₂--, --CF₂O(C₂F₄O)_{q}CF₂--,-(CF₂)₃O(C₄F₈O)_{q}(CF₂)₃--, -CF(CF₃)O(CF(CF₃)CF₂O)ₙCF(CF₃)-, and-CF(CF₃)(OCF₂CF(CF₃))ₛOCₜF₂ₜO(CF(CF₃)CF₂O)_{q}CF(CF₃)-- (wherein n and q are as defined above; s has an average value of 0 to 50, 1 to 50, 3 to 30, 3 to 15, or 3 to 10; the sum of q and s (that is, q+s) has an average value of 0 to 50 or about 4 to 40; the sum of q and n (that is, q+n) is greater than 0; and t is an integer of 2 to 6 (preferably, 2 to 4; more preferably, 4)).

Preferably, the perfluoropolyether segment is monovalent or divalent, and/or the perfluoropolyether segment comprises at least one divalent hexafluoropropyleneoxy group (-CF(CF₃)-CF₂O-). Preferred perfluoropolyether segments include F[CF(CF₃)CF₂O]ₐCF(CF₃)- (or, as represented above, C₃F₇O(CF(CF₃)CF₂O)ₙCF(CF₃), where n + 1 = a), wherein a has an average value of 4 to 20, and -CF(CF₃)(OCF₂CF(CF₃))_{b}O-(CₜF₂ₜ)-O(CF(CF₃)CF₂O)_{c}CF(CF₃)-, wherein t is 2, 3, or 4 and b+c has an average value of 4 to 24, and --CF₂O(CF₂O)ₙ(C₂F₄O)_{q}CF₂--, and-CF₂O(C₂F₄O)_{q}CF₂--, wherein the average value of n+q or q is from 4 to 24 (most preferably, 9). Such perfluoropolyether segments can be obtained through the oligomerization of hexafluoropropylene oxide and can be preferred because of their relatively benign environmental properties.

The foregoing polyfluoropolyether structures are approximate average structures that represent a distribution of oligomers and/or polymers. Thus, the subscripts designating the numbers of repeating units in the structures can be non-integral.

The divalent or trivalent linking group, Q, can include linear, branched, or cyclic structures that can be saturated or unsaturated. The divalent or trivalent linking group, Q, optionally contains one or more heteroatoms selected from sulfur, oxygen, and nitrogen, and/or optionally contains one or more functional groups selected from ester (carbonyloxy), amido (carbonylimino), sulfonamido (sulfonylimino), carbonyl, carbonate (oxycarbonyloxy), ureylene (iminocarbonylimino), carbamate (oxycarbonylimino), thio, sulfonyl, sulfinyl, and combinations thereof (preferably, sulfonamido, amido, thio, or a combination thereof; more preferably, amido, thio, or a combination thereof; most preferably, amido). For flexural strength, Q favorably includes a segment with not less than 2 carbon atoms, the segment being directly bonded to the -C(R)₂-group. For such embodiments, generally Q includes not more than 25 carbon atoms. Q is preferably substantially stable against hydrolysis and other chemical transformations, such as nucleophilic attack. When more than one Q group is present, the Q groups can be the same or different.

For certain embodiments, including any one of the above embodiments, Q includes organic or heteroorganic linking groups such as -C(O)N(R)-(CH₂)ₖ-, -S(O)₂N(R)-(CH₂)ₖ-, -(CH₂)ₖ-, -CH₂O-(CH₂)ₖ-, -C(O)S-(CH₂)ₖ-, -CH₂OC(O)N(R)-(CH₂)ₖ-, 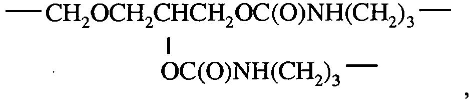 -(CH₂)ₖ-S(O)₂-(CH₂)ₖ-, -(CH₂)ₖ-S(O)-(CH₂)ₖ-, -(CH₂)ₖ-S-(CH₂)ₖ-, and combinations thereof,
wherein R is hydrogen or C₁₋₄ alkyl (preferably, hydrogen), and each k is independently 2 to 25. For certain of these embodiments, each k is independently 2 to 15, or is independently 2 to 10 or 12.

Favorably Q is a divalent linking group, and y is 1. In particular, Q is favorably a covalent bond or a saturated or unsaturated hydrocarbon group including 1 to 15 carbon atoms and optionally containing 1 to 4 heteroatoms and/or 1 to 4 functional groups. For certain of these embodiments, Q is a linear hydrocarbon containing 1 to 10 carbon atoms, optionally containing 1 to 4 heteroatoms and/or 1 to 4 functional groups. For certain of these embodiments, Q contains one functional group. For certain of these embodiments, Q is preferably -C(O)N(R)(CH₂)₂-, -OC(O)N(R)(CH₂)₂-, -CH₂O(CH₂)₂-, o -CH₂-OC(O)N(R)-(CH₂)₂-, -(CH₂)₃-S-(CH₂)₃-, or a combination thereof, wherein R is hydrogen or C₁₋₄ alkyl (preferably, hydrogen).

The Y groups can be the same or different and, when hydrolyzable, can be capable of hydrolyzing, for example, in the presence of water, optionally under acidic or basic conditions, to produce groups capable of undergoing a condensation reaction (for example, hydroxysilyl groups). Desirably, each Y is independently selected from hydroxyl, hydrogen, halogen, alkoxy, acyloxy, aryloxy, polyalkyleneoxy, and combinations thereof (more desirably, each Y is independently selected from hydroxyl, alkoxy, acyloxy, aryloxy, polyalkyleneoxy, and combinations thereof; even more desirably, each Y is independently selected from hydroxyl, alkoxy, acyloxy, aryloxy, and combinations thereof; most desirably, each Y is independently alkoxy).

Favorably, alkoxy is -OR', and acyloxy is -OC(O)R', wherein each R' is independently a lower alkyl group, optionally comprising one or more halogen atoms. For certain embodiments, R' is preferably C₁₋₆ alkyl and more preferably C₁₋₄ alkyl. R' can be a linear or branched alkyl group. Favorably, aryloxy is -OR", wherein R" is aryl, optionally comprising one or more substituents independently selected from halogen atoms and C₁₋₄ alkyl optionally substituted by one or more halogen atoms. For certain embodiments, R" is preferably unsubstituted or substituted C₆₋₁₂ aryl and more preferably unsubstituted or substituted C₆₋₁₀ aryl. Favorably, polyalkyleneoxy is -O-(CHR⁴-CH₂O)_{q}-R³, wherein R³ is C₁₋₄ alkyl, R⁴ is hydrogen or methyl, with at least 70 percent of R⁴ being hydrogen, and q is 1 to 40 (preferably, 2 to 10).

Representative examples of useful monopodal and multipodal fluorinated organosilane compounds include compounds according to the above Formulas I and II, wherein any of the above-described preferred R*_{f}* and R'*_{f}* groups can be combined with any of the above-described preferred Q, Y, and R^{1a} groups, as well as any of the preferred values of subscripts x, y, and z (such preferred groups and subscripts being designated as preferred, favored, desirable, or otherwise specified with particularity in the above description).

Preferred curable surface treatment compositions for use in the process of the invention comprise:
(a) at least one polyfluoropolyether silane of Formula I above, wherein R*_{f}* is C₃F₇O(CF(CF₃)CF₂O)ₙCF(CF₃)-, and Q-C(R)₂-Si(Y)₃₋ₓ(R^{1a})ₓ is C(O)NH(CH₂)₃Si(Y)₃, (CH₂)₃-S-(CH₂)₃Si(Y)₃, or a combination thereof (preferably, wherein each Y is independently alkoxy; more preferably, wherein each Y is independently methoxy or ethoxy) wherein n is 3 to 50 (preferably, from 3 to 20; more preferably, from 4 to 10);
(b) optionally, at least one polyfluoropolyether silane of Formula II above, wherein R'*_{f}* is -CF₂O(CF₂O)ₙ(C₂F₄O)_{q}CF₂-, and Q-C(R)₂-Si(Y)₃₋ₓ(R^{1a})ₓ is C(O)NH(CH₂)₃Si(Y)₃, (CH₂)₃-S-(CH₂)₃Si(Y)₃, or a combination thereof (preferably, wherein each Y is independently alkoxy; more preferably, wherein each Y is independently methoxy or ethoxy) wherein n is 1 to 50 and q is 3 to 40 (preferably, wherein the average value of n+q or q is from 4 to 24; more preferably, wherein n and q are each 9 to 12); and
(c) at least one organosilane compound comprising (i) a multivalent non-fluorinated segment and (ii) at least two monovalent endgroups, each monovalent endgroup independently comprising at least one silyl moiety comprising at least one group selected from hydrolyzable groups, hydroxyl, and combinations thereof, and/or at least one organosilazane compound.

The above-described fluorinated organosilane compounds can be synthesized using standard techniques. For example, commercially available or readily synthesized polyfluoropolyether esters (or functional derivatives thereof) can be combined with a functionalized alkoxysilane, such as a 3-aminopropylalkoxysilane, and methods described in U.S. Patent Nos. 3,250,808 (Moore), 3,646,085 (Barlett), 3,810,874 (Mitsch et al.), 7,294,731 (Flynn et al.), and CA Patent No. 725747 (Moore) can be used or adapted to prepare compounds in accordance with the above description. It will be understood that functional groups other than esters can be used with equal facility to incorporate silane groups into a perfluoropolyether.

Perfluoropolyether diesters, for example, can be prepared through direct fluorination of a hydrocarbon polyether diester. Direct fluorination involves contacting the hydrocarbon polyether diester with fluorine (F₂) in a diluted form. The hydrogen atoms of the hydrocarbon polyether diester will be replaced with fluorine atoms, thereby generally resulting in the corresponding perfluoropolyether diester. Direct fluorination methods are disclosed in, for example, U.S. Patent Nos. 5,578,278 (Fall et al.) and 5,658,962 (Moore et al.).

Methods of making perfluoroalkyl silanes are also known. See, for example, U.S. Patent No. 5,274,159 (Pellerite et al.).

For certain embodiments, the weight average molecular weight of the fluorinated monovalent or multivalent segment (for example, polyfluoropolyether segment) of the fluorinated organosilane compound(s) can be 900 or higher (more desirably, 1000 or higher). Higher weight average molecular weights can further enhance durability. Generally, for ease of use and application, the weight average molecular weight of the fluorinated segment is desirably less than or equal to 6000 (more desirably, less than or equal to 4000; most desirably, less than or equal to 3000).

Polyfluoropolyether silanes typically include a distribution of oligomers and/or polymers. Desirably for enhancing the structural integrity of the polyfluoropolyether-containing surface treatment, the amount of polyfluoropolyether silane (in such a distribution) having a polyfluoropolyether segment having a weight average molecular weight less than 750 is not more than 10 percent by weight (more desirably, not more than 5 percent by weight; even more desirably, not more than 1 percent by weight; most desirably, 0 percent by weight), based upon the total amount of polyfluoropolyether silane in the distribution.

### Organosilane and Organosilazane Compounds

Compounds suitable for use as a multipodal component of the curable surface treatment composition include organosilazane compounds. Useful organosilazane compounds optionally comprise at least one group selected from hydroxyl, hydrolyzable groups, and combinations thereof, as such groups can participate in condensation curing reactions. Organosilazane compounds having no such groups can also be used, however, by applying heat and/or base to effect the evolution of ammonia and thereby conversion of one or more of the compound's imino moieties to one or more hydroxyl moieties.

Useful organosilazane compounds include those that comprise (a) a multivalent (preferably, divalent) non-fluorinated segment (preferably, imino) and (b) at least two monovalent endgroups, each monovalent endgroup independently comprising at least one silyl moiety (preferably, one to 20; more preferably, one to 5; most preferably, one or two) optionally comprising at least one group selected from hydroxyl, hydrolyzable groups, and combinations thereof. Representative examples of useful organosilazane compounds include hexamethyldisilazane, 1,3-diphenyltetramethyldisilazane, hexaethyldisilazane, and the like, and combinations thereof. Preferred organosilazane compounds include hexamethyldisilazane, hexaethyldisilazane, and combinations thereof (more preferably, hexamethyldisilazane).

Suitable multipodal compounds also include organosilane compounds that comprise (a) a multivalent (preferably, divalent) non-fluorinated segment (for example, oxy, hydrocarbyl, heteroatom-containing hydrocarbyl, siloxanyl, or a combination thereof; preferably, a divalent segment selected from oxy, alkylene, heteroatom-containing alkylene (for example, polyether), alkenylene, heteroatom-containing alkenylene, cycloalkylene, heteroatom-containing cycloalkylene, arylene, heteroatom-containing arylene, polydiorganosiloxane, and combinations thereof) and (b) at least two monovalent endgroups, each monovalent endgroup independently comprising at least one silyl moiety (preferably, one to 20; more preferably, one to 5; most preferably, one or two) comprising at least one group selected from hydroxyl, hydrolyzable groups, and combinations thereof.

Representative examples of useful organosilane compounds include bis(trimethoxysilylpropyl)amine, bis(triethoxysilylpropyl)amine, bis(trimethoxysilylpropyl)urea, bis(methyldiethoxysilylpropyl)amine, bis(methyldimethoxysilylpropyl)N-methylamine, 2,2-bis(3-triethoxysilylpropoxymethyl)butanol, tris(3-trimethoxysilylpropyl)isocyanurate, bis[3-(triethoxysilyl)propyl]tetrasulfide, bis[3-(triethoxysilyl)propyl]disulfide, bis-[m-(2-triethoxysilylethyl)tolyl]polysulfide, bis(triethoxysilylethyl)vinylmethylsilane, bis(triethoxysilyl)ethylene, bis(trimethoxysilylmethyl)ethylene, 1,3-[bis(3-triethoxysilylpropyl)polyethylenoxy]-2-methylenepropane, bis(triethoxysilyl)methane, bis(trimethoxysilyl)hexane, bis(triethoxysilyl)ethane, bis(trimethoxysilyl)ethane, 1,8-bis(triethoxysilyl)octane, 1,2-bis(triethoxysilyl)decane, bis(trimethoxysilylethyl)benzene, bis(triethoxysilyl)ethylene, bis[(triethoxysilyl)propyl]disulfide, N,N'-bis[(3-trimethoxysilyl)propyl]ethylenediamine, 1,4-bis(trimethoxysilylmethyl)benzene, 1,3-bis(trimethoxysilylpropyl)benzene, bis(triethoxysilylethyl)benzene, 1-(triethoxysilyl)-2-(diethoxymethylsilyl)ethane, bis(4-triethoxysilylpropoxy-3-methoxy-phenyl)-1,6-heptadiene-3,5-dione, bis(3-methyldimethoxysilyl)propyl]polypropylene oxide, polydimethylsiloxane (PDMS)-disilane, poly(ethylene glycol) (PEG)-disilane, and the like, and combinations thereof. Preferred compounds include bis(trimethoxysilylpropyl)amine, bis(triethoxysilyl)ethane, bis(trimethoxysilyl)ethane, bis[3-(triethoxysilyl)propyl]disulfide, bis[(triethoxysilyl)propyl]disulfide, bis(trimethoxysilylethyl)benzene, 1,4-bis(trimethoxysilylmethyl)benzene, 1,3-bis(trimethoxysilylpropyl)benzene, bis(triethoxysilylethyl)benzene, and combinations thereof (more preferably, bis(trimethoxysilylpropyl)amine, bis(triethoxysilyl)ethane, bis(trimethoxysilyl)ethane, and combinations thereof).

A class of the multipodal organosilazane and organosilane compounds includes those that can be represented by the following general formula:

A[Q-[Si(Y)₃₋ₙ(R^{1a})ₙ]_{y}]_{z} III

wherein:
A is a z-valent non-polymeric, oligomeric, or polymeric radical selected from oxy; aliphatic, alicyclic, and aromatic hydrocarbyl radicals (optionally containing at least one heteroatom); divalent (imino) and trivalent (nitrilo) amino radicals; siloxanyl radicals; and combinations thereof;
each Q is independently a divalent or trivalent linking group;
each Y is independently hydroxyl, a hydrolyzable group, or a combination thereof;
each R^{1a} is independently a non-hydrolyzable group;
each y is independently an integer of 1 or 2;
z is an integer of 2, 3, or 4 (preferably, 2); and
each n is independently an integer of 0, 1, 2, or 3 (preferably, 0-2 for organosilanes and 3 for organosilazanes).

Preferably, A is a divalent radical selected from oxy, alkylene, heteroatom-containing alkylene (for example, polyether), alkenylene, heteroatom-containing alkenylene, cycloalkylene, heteroatom-containing cycloalkylene, arylene, heteroatom-containing arylene, imino, polydiorganosiloxane, and combinations thereof (more preferably, a divalent radical selected from alkylene, heteroatom-containing alkylene, arylene, imino, and combinations thereof; most preferably, alkylene, heteroatom-containing alkylene, imino, and combinations thereof). The molecular weight of A can vary over a wide range, depending upon its nature (for example, non-polymeric, oligomeric, or polymeric). For some embodiments, molecular weights of 250 to 5000 can be useful (preferably, 250 to 2000). Preferences for Q, Y, y, and R^{1a} include those set forth above for Formula II.

Such organosilazane and organosilane compounds can be prepared by known techniques (including, for example, the methods described in U.S. Patent No. 7,235,683 (Janeiro et al.)). Many of the compounds are also commercially available (for example, numerous silane coupling agents can be obtained from Gelest, Inc., Morrisville, PA). The compounds can be used either individually or in the form of mixtures in carrying out the process of the invention.

### Application and Curing of Curable Surface Treatment Composition

The above-described monopodal fluorinated organosilane compounds and multipodal organosilazane and/or organosilane compounds can be combined in any of a wide range of ratios, depending upon, for example, the particular application, the nature of the substrate, and the desired surface and/or bulk properties of the resulting cured coating or surface treatment. Useful surface treatment compositions include those that comprise a weight percent ratio of the monopodal compound to the multipodal compound (monopodal fluorinated organosilane compound : multipodal organosilane and/or organosilazane compound) equal to or greater than 10 : 90 (in particular, equal to or greater than 20 : 80; more particularly, equal to or greater than 30 : 70; most particularly, equal to or greater than 40 : 60). Useful surface treatment compositions include those that comprise a weight percent ratio of the monpodal compound to the multipodal compound (monopodal fluorinated organosilane compound : multipodal organosilane and/or organosilazane compound) equal to or less than 99 : 1 (in particular, equal to or less than 97 : 3; most particularly, equal to or less than 95 : 5).

If desired, the optional multipodal fluorinated organosilane compound(s) can be included in the composition. For example, for applications in which greater fluorine content can be desirable, the multipodal fluorinated organosilane compound(s) can be used in place of a portion of the multipodal organosilazane and/or organosilane compounds (for example, so as to replace from 0.01 to 99 weight percent of the multipodal organosilazane and/or organosilane compounds).

The resulting curable surface treatment composition can have a relatively long shelf life in the absence of moisture. The monopodal and multipodal components of the composition can be in the form of relatively viscous liquids that can be used in the surface treatment process of the invention in neat form or, preferably, in admixture with commonly-used solvents (for example, alkyl esters, ketones, alkanes, alcohols, and the like, and mixtures thereof).

The composition comprises at least one organic solvent comprising a hydrofluoroether.

In some embodiments, the surface treatment composition further includes at least one organic solvent that can dissolve or suspend at least 0.01 percent by weight of the monpodal and multipodal components (based upon the total weight of the surface treatment composition). In some embodiments, it can be desirable that the solvent or mixture of solvents have a solubility for water of at least 0.1 percent by weight, and for certain of these embodiments, a solubility for acid of at least 0.01 percent by weight. When solvent is used, useful concentrations of the monpodal and multipodal components can vary over a wide range (for example, from 0.01 or 0.1 or 1 to 90 weight percent), depending upon the viscosity of the monpodal and multipodal compounds, the application method utilized, the nature of the substrate, and the desired surface treatment characteristics.

Suitable organic solvents for use in the surface treatment composition include aliphatic alcohols such as, for example, methanol, ethanol, and isopropanol; ketones such as acetone and methyl ethyl ketone; esters such as ethyl acetate and methyl formate; ethers such as diethyl ether, diisopropyl ether, methyl t-butyl ether, and dipropylene glycol monomethyl ether (DPM); hydrocarbons solvents such as alkanes, for example, heptane, decane, and other paraffinic solvents; perfluorinated hydrocarbons such as perfluorohexane and perfluorooctane; fluorinated hydrocarbons, such as pentafluorobutane; hydrofluoroethers such as methyl perfluorobutyl ether and ethyl perfluorobutyl ether; and the like; and combinations thereof. Preferred solvents include aliphatic alcohols, perfluorinated hydrocarbons, fluorinated hydrocarbons, hydrofluoroethers, and combinations thereof (more preferably, aliphatic alcohols, hydrofluoroethers, and combinations thereof; most preferably, hydrofluoroethers and combinations thereof).

Minor amounts of other optional components can be added to the surface treatment composition to impart particular desired properties for particular curing methods or conditions or particular surface treatment applications. Useful compositions can comprise conventional additives such as, for example, catalysts (including the moisture curing catalysts described below), initiators, surfactants, stabilizers, anti-oxidants, flame retardants, crosslinkers, ultraviolet (UV) absorbers, radical quenchers, and mixtures thereof.

A class of useful crosslinkers includes compounds that can be represented by the following general formula:

Si(Y)₄₋ₙ(R^{1a})ₙ IV

wherein:
each Y is independently hydroxyl, a hydrolyzable group, or a combination thereof;
each R^{1a} is independently a non-hydrolyzable group; and
n is an integer of 0, 1, 2, or 3. Preferences for Y and R^{1a} include those set forth above for Formula I. The crosslinkers can be included in the surface treatment composition in any of a wide range of amounts (for example, from 1 weight percent to 40 weight percent), depending, for example, upon the particular application and the desired properties. Optionally, the crosslinkers can contain fluorine.

The combination of monopodal and multipodal compounds (or a composition comprising, consisting, or consisting essentially thereof) can be used as a fluorochemical surface treatment to impart a degree of hydrophobicity and/or oleophobicity to a variety of substrates. Substrates suitable for use in the process of the invention (and for preparing the surface-treated articles of the invention) include those having at least one surface comprising a material that is solid and preferably substantially inert to any coating solvent that is used. Preferably, the surface treatment can adhere to the substrate surface through chemical interactions, physical interactions, or a combination thereof (more preferably, a combination thereof).

Suitable substrates can comprise a single material or a combination of different materials and can be homogeneous or heterogeneous in nature. Useful heterogeneous substrates include coated substrates comprising a coating of a material (for example, a glass or a primer) borne on a physical support (for example, a polymeric film).

Useful substrates include those that comprise wood, glass, minerals (for example, both man-made ceramics such as concrete and naturally-occurring stones such as marble and the like), polymers (for example, polycarbonate, polyester, polyacrylate, and the like), metals (for example, copper, silver, aluminum, iron, chromium, stainless steel, nickel, and the like), metal alloys, metal compounds (for example, metal oxides and the like), leather, parchment, paper, textiles, painted surfaces, and combinations thereof. Preferred substrates include those having siliceous surfaces in either primed or unprimed form. Preferred substrates include glass, minerals, wood, metals, metal alloys, metal compounds, primed polymers, and combinations thereof (more preferably, glass, minerals, metals, metal alloys, metal compounds, primed polymers, and combinations thereof; most preferably, glass, minerals, and combinations thereof).

For best efficacy, the substrate can have a surface with groups capable of forming covalent bonds to the monopodal and multipodal compounds (for example, hydroxyl groups). In some embodiments, the suitability of the surface of the substrate can be improved by deposition of a primer (for example, a silica sol) or by some other physical or chemical surface modification technique. Plasma deposition techniques can be used, if desired. For example, in some embodiments, a layer comprising silicon, oxygen, and hydrogen, known in the art as diamond-like glass, can be deposited on the surface of the substrate prior to application of the surface treatment composition.

Forming a diamond-like glass layer (for example, comprising silicon, oxygen, and hydrogen) on at least a portion of the surface of the substrate by plasma deposition can be carried out in a suitable reaction chamber having a capacitively-coupled system with at least one electrode powered by an RF (radio frequency) source and at least one grounded electrode. Details concerning materials and methods for preparing diamond-like glass layers can be found, for example, in U.S. Patent No. 6,696,157 (David et al.) and 6,878,419 (David et al.).

The monopodal and multipodal compounds of the surface treatment composition can be applied separately or in combination (preferably, in combination) to at least a portion of at least one major surface of the substrate in essentially any manner (and with essentially any thickness) that can form a useful coating. Useful application methods include coating methods such as dip coating, spin coating, spray coating, wiping, roll coating, brushing, spreading, flow coating.

Typically, the surface treatment composition can be coated on the substrate such that after an optional drying, a monolayer of the surface treatment composition results. Typically, such a monolayer can be from 0.001 to 1 micrometer thick (more typically, from 0.001 to 0.10 microns thick).

The substrate to be treated can be pre-cleaned, if desired, by methods known in the art to remove contaminants prior to applying the surface treatment composition. One useful pre-cleaning method is exposure to an oxygen plasma. For this pre-cleaning, pressures in the chamber can be maintained between 1.3 Pa (10 mtorr) and 27 Pa (200 mtorr). Plasma can be generated with radio frequency (RF) power levels of between 500 W and 3000 W. A solvent-washing step with an organic solvent such as acetone or ethanol or an acid etch treatment can also be included prior to the exposure to oxygen plasma, if desired.

After application to the substrate, the surface treatment composition (or a composition comprising, consisting, or consisting essentially of the monopodal and multipodal compounds) can be cured by exposure to heat and/or moisture. Moisture cure can be effected at temperatures ranging from room temperature (for example, 23°C) up to 80°C or more. Moisture curing times can range from a few minutes (for example, at the higher temperatures) to hours (for example, at the lower temperatures).

For the preparation of a durable coating, sufficient water typically can be present to cause hydrolysis of the hydrolyzable groups described above, so that condensation to form Si-O-Si groups can occur (and thereby curing can be achieved). The water can be, for example, present in the coating composition, adsorbed on the substrate surface, or in the ambient atmosphere. Typically, sufficient water can be present for the preparation of a durable coating if the coating method is carried out at room temperature in an atmosphere containing water (for example, an atmosphere having a relative humidity of 30 percent to 50 percent). Preferably, the surface treatment composition can undergo chemical reaction with the surface of the substrate (for example, with a layer comprising silicon, oxygen, and hydrogen on the substrate surface having hydroxysilyl groups) to form a durable coating through the formation of covalent bonds (including bonds in Si-O-Si groups).

Useful moisture curing catalysts are well-known in the art and include ammonia, N-heterocyclic compounds (for example, 1-methylpiperazine, 1-methylpiperidine, 4,4'-trimethylenedipiperidine, 4,4'-trimethylene-bis(1-methylpiperidine), diazobicyclo[2.2.2]octane, cis-2,6-dimethylpiperazine, and the like, and combinations thereof), mono-, di-, and trialkylamines (for example, methylamine, dimethylamine, trimethylamine, phenylamine, diphenylamine, triphenylamine, DBU (that is, 1,8-diazabicyclo[5.4.0]-7-undecene), DBN (that is, 1,5-diazabicyclo[4.3.0]-5-nonene), 1,5,9-triazacyclododecane, 1,4,7-triazacyclononane, and the like, and combinations thereof), organic or inorganic acids (for example, acetic acid, propionic acid, butyric acid, valeric acid, maleic acid, stearic acid, hydrochloric acid, nitric acid, sulfuric acid, phosphoric acid, chloric acid, hypochlorous acid, and the like, and combinations thereof), metal carboxylates, metal acetylacetonate complexes, metal powders, peroxides, metal chlorides, organometallic compounds.

Preferred moisture curing catalysts include acids (for example, acetic acid, citric acid, formic acid, triflic acid, perfluorobutyric acid, sulfuric acid, hydrochloric acid, and the like, and mixtures thereof). When used, the moisture curing catalysts can be present in amounts ranging from 0.1 to 10 weight percent (preferably, from 0.1 to 5 weight percent; more preferably, from 0.1 to 2 weight percent), based upon the total weight of catalyst and surface treatment composition).

A substrate to be coated can typically be contacted with the surface treatment composition at room temperature (typically from 15°C to 30°C, and more typically from 20°C to 25°C). Alternatively, the surface treatment composition can be applied to substrates that are preheated at a temperature of, for example, between 60°C and 150°C. Following application of the surface treatment composition, the coated substrate can be dried and the resulting coating cured at ambient temperature (for example, 15°C to 30°C) or elevated temperature (for example, at 40°C to 300°C) for a time sufficient for the curing to take place.

The curable surface treatment composition can be applied to articles comprising one or more of the above-described substrates and then cured to form surface treatments in the form of crosslinked hardcoats. The hardcoats can exhibit surface and/or bulk properties that can be tailored by varying the degree of crosslinking and by varying the natures and relative amounts of the monopodal and multipodal compounds. The hardcoats (with their often outstanding durability, adhesion, and repellency properties) can be widely used for applications requiring durable low surface energy characteristics (for example, anti-graffiti coatings for signs, buildings, transportation vehicles; easily cleanable and/or anti-smudge coatings for glass, paper, clothes, metals, ceramic tiles, electronic devices, optical devices; mold release coatings for polymer or composite molding).

### EXAMPLES

Objects and advantages of this invention are further illustrated by the following examples, but the particular materials and amounts thereof recited in these examples, as well as other conditions and details, should not be construed to unduly limit this invention. These examples are merely for illustrative purposes only and are not meant to be limiting on the scope of the appended claims.

### Materials

All solvents were standard reagent grade obtained from commercial sources and were used without further purification unless specified otherwise.
"HFE 7200" (hydrofluoroether) was obtained from, and is commercially available from, 3M Company, St. Paul, MN, under the trade designation 3M^{™} Novec^{™} Engineered Fluid HFE-7200.
"DYNAS" (bis (trimethoxysilylpropyl) amine) was obtained from Evonik Industries AG, Germany, under the trade designation Dynasylan^{™} 1124.
"HMDS" (hexamethyldisilazane) was obtained from Aldrich Chemical Company, Milwaukee, WI.
"BTEOSE" (bis(triethoxysilyl)ethane) was obtained from Aldrich Chemical Company, Milwaukee, WI.
"BTMSE" (bis(trimethoxysilyl)ethane) was obtained from Aldrich Chemical Company, Milwaukee, WI.
Aminopropyltrimethoxy silane was purchased from Aldrich Chemical Company, Milwaukee, WI.
"PPFO-Disilane" (an α,ω-poly(perfluorooxyalkylene)disilane) was prepared essentially as described in U.S. Patent No. 3,950,588 (McDougal et al.).
"HFPO-" refers to the end group F(CF(CF₃)CF₂O)ₐCF(CF₃)- of the methyl ester F(CF(CF₃)CF₂O)ₐCF(CF₃)C(O)OCH₃, wherein a averages from 4-20, which can be prepared according to the method described in U.S. Patent No. 3,250,808 (Moore et al.), the description of which is incorporated herein by reference, with purification by fractional distillation.
"HFPO-Silane" (HFPO-CONHCH₂CH₂CH₂Si(OCH₃)₃) was prepared as follows: A 100 mL 3-necked, round bottom flask equipped with a magnetic stir bar, nitrogen (N₂) inlet, and reflux condenser was charged with HFPO-COOCH₃ (20 g, 0.01579 mole) and NH₂CH₂CH₂CH₂-Si(OCH₃)₃ (2.82 g, 0.01579 mole) under a N₂ atmosphere. The resulting reaction mixture was heated at 75°C for 12 hours. The reaction was monitored by infrared (IR) spectroscopy, and, after the disappearance of the ester peak, the resulting clear, viscous oil was kept under vacuum for another 8 hours and used as such.

### Test Methods

### Method for Measuring Contact Angles

Samples were prepared as described in the following examples. The samples were rinsed for 1 minute by hand agitation in isopropyl alcohol (IPA), which was allowed to evaporate before measuring water (H₂O) contact angles (using water as the wetting liquid). Measurements were made using deionized water filtered through a filtration system (obtained from Millipore Corporation, Billerica, MA) on a video contact angle analyzer (available as product number VCA-2500XE from AST Products, Billerica, MA). Reported values are the averages of measurements on at least three drops measured on the right and left sides of the drops. Drop volumes were 5 microliters for static contact angle measurements and 1-3 microliters for advancing and receding contact angle measurements.

### Examples 1-8 and Comparative Examples A-E

Coating compositions were prepared by adding together desired quantities of HFE 7200, HFPO-Silane, and a selected bipodal silane, and then mixing the resulting combination at room temperature in a plastic bottle. The resulting mixtures were further rolled for 12 hours at room temperature. The components of the coating compositions and their amounts are set forth in Table 1 below for each of the examples and comparative examples.

The resulting coating compositions were clear and stayed clear for several months (no problems associated with shelf life). The coating compositions were coated on glass substrates (which had been cleaned with acetone and then dried in air). The substrates were dip coated for 2 minutes, dried at room temperature in air for approximately 5 minutes, and then were cured in an oven at 150°C for 30 minutes. For Comparative Examples D and E, the components were not pre-mixed as described above, but rather were coated sequentially (for Comparative Example D, HFPO-Silane was coated first, followed by HMDS; for Comparative Example E, HMDS was coated first, followed by HFPO-Silane).

**Table 1.**

| **Example No.** | **HFPO-Silane (g)** | **PPFO-Disilane (g)** | **DYNAS (g)** | **HMDS (g)** | **BTEOSE (g)** | **BTMSE (g)** | **HFE 7200 (g)** |
|---|---|---|---|---|---|---|---|
| C-A | 5 | 0 | 0 | 0 | 0 | 0 | 95 |
| C-B | 0.5 | 0 | 0 | 0 | 0 | 0 | 99.5 |
| C-C | 4.5 | 0.5 | 0 | 0 | 0 | 0 | 95 |
| C-D | 4.5 | 0 | 0 | 0.5 | 0 | 0 | 95 |
| C-E | 4.5 | 0 | 0 | 0.5 | 0 | 0 | 95 |
| 1 | 4.5 | 0 | 0.5 | 0 | 0 | 0 | 95 |
| 2 | 4.5 | 0 | 0 | 0.5 | 0 | 0 | 95 |
| 3 | 4.5 | 0 | 0 | 0 | 0.5 | 0 | 95 |
| 4 | 4.5 | 0 | 0 | 0 | 0 | 0.5 | 95 |
| 5 | 0.45 | 0 | 0.05 | 0 | 0 | 0 | 99.5 |
| 6 | 0.45 | 0 | 0 | 0.05 | 0 | 0 | 99.5 |
| 7 | 0.45 | 0 | 0 | 0 | 0.05 | 0 | 99.5 |
| 8 | 0.45 | 0 | 0 | 0 | 0 | 0.05 | 99.5 |

The resulting cured coated samples were then tested to determine their water contact angles by using the test method described above. The results of the contact angle measurements are shown below in Table 2.

**Table 2.**

| **Example No.** | **Water Contact Angles** | | |
|---|---|---|---|
| | **Static** | **Advancing** | **Receding** |
| C-A | 97 | 98.5 | 89 |
| C-B | 112 | 120 | 89 |
| C-C | 121 | 122 | 59 |
| C-D | 112 | 118 | 71 |
| C-E | 120 | 126 | 75 |
| 1 | 108 | 117 | 81 |
| 2 | 120 | 132 | 68 |
| 3 | 119 | 131 | 64 |
| 4 | 114 | 128 | 78 |
| 5 | 117 | 121 | 69 |
| 6 | 119 | 128 | 71 |
| 7 | 114 | 126 | 96 |
| 8 | 115 | 126 | 89 |

## Claims

1. A process comprising
(a) providing at least one substrate having at least one major surface;
(b) providing a curable surface treatment composition comprising
(1) at least one fluorinated organosilane compound comprising (i) a monovalent segment being a polyfluoropolyether and (ii) a monovalent endgroup comprising at least one silyl moiety comprising at least one group selected from hydrolyzable groups, hydroxyl, and combinations thereof,
(2) optionally, at least one fluorinated organosilane compound comprising (i) a multivalent segment being a polyfluoropolyether and (ii) at least two monovalent endgroups, each said monovalent endgroup independently comprising at least one silyl moiety comprising at least one group selected from hydrolyzable groups, hydroxyl, and combinations thereof, and
(3) at least one organosilane compound comprising (i) a multivalent non-fluorinated segment and (ii) at least two monovalent endgroups, each said monovalent endgroup independently comprising at least one silyl moiety comprising at least one group selected from hydroxyl, hydrolyzable groups, and combinations thereof, and/or at least one organosilazane compound;
(4) at least one organic solvent comprising a hydrofluoroether; and
(c) applying said curable surface treatment composition to at least a portion of at least one major surface of said substrate; and
(d) curing said applied, curable surface treatment composition to form a surface treatment.

2. The process of Claim 1, wherein said multivalent non-fluorinated segment is divalent; and/or wherein said multivalent non-fluorinated segment is selected from oxy, hydrocarbyl, heteroatom-containing hydrocarbyl, siloxanyl, and combinations thereof.

3. The process of Claim 1 or any other of the preceding claims, wherein said fluorinated organosilane compound comprising a monovalent segment is represented by the following general formula:
R*_{f}*-Q-[C(R)₂-Si(Y)₃₋ₓ(R^{1a})ₓ]_{y} I
wherein R*_{f}* is a monovalent segment that is a polyfluoropolyether; Q is a divalent or trivalent linking group; each R is independently hydrogen or a C₁₋₄ alkyl group; each Y is independently hydroxyl, a hydrolyzable group, or a combination thereof; each R^{1a} is independently a non-hydrolyzable group; each x is independently an integer of 0, 1, or 2; and y is an integer of 1 or 2.

4. The process of Claim 3, wherein said R*_{f}* contains from 4 to 35 perfluorinated carbon atoms; said R*_{f}* comprises at least one divalent hexafluoropropyleneoxy group (-CF(CF₃)-CF₂O-); said Q is divalent; each said R^{1a} is independently C₁₋₈ alkyl, phenyl, or a combination thereof; each said R is hydrogen; each said x is 0; and/or said y is 1.

5. The process of Claim 3 or Claim 4, wherein said Rf is F[CF(CF3)CF20]aCF(CF3)- , wherein a has an average value of 4 to 20.

6. The process of Claim 3 or Claim 4, wherein said R*_{f}* is C₃F₇O(CF(CF₃)CF₂O)ₙCF(CF₃)-, and said Q-C(R)₂-Si(Y)₃₋ₓ(R^{1a})ₓ is C(O)NH(CH₂)₃Si(Y)₃, (CH₂)₃-S-(CH₂)₃Si(Y)₃, or a combination thereof, wherein n is 3 to 50.

7. The process of Claim 3 or any of Claims 4-6, wherein each said Q independently contains at least one heteroatom selected from sulfur, oxygen, and nitrogen, and/or contains at least one functional group selected from ester (carbonyloxy), amido (carbonylimino), sulfon-amido (sulfonylimino), carbonyl, carbonate (oxycarbonyloxy), ureylene (iminocarbonylimino), carbamate (oxycarbonylimino), thio, sulfonyl, sulfinyl, and combinations thereof.

8. The process of Claim 3 or any of Claims 4-7, wherein each said Q is independently selected from -C(O)N(R)-(CH₂)ₖ-, -S(O)₂N(R)-(CH₂)ₖ-, -(CH₂)ₖ-, -CH₂O-(CH₂)ₖ-, -C(O)S-(CH₂)ₖ-, -CH₂OC(O)N(R)-(CH₂)ₖ-, 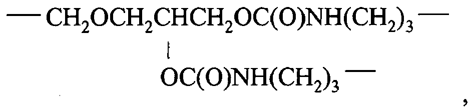 -(CH₂)ₖ-S(O)₂-(CH₂)ₖ-, (CH₂)ₖ-S(O)-(CH₂)ₖ-, -(CH₂)ₖ-S-(CH₂)ₖ-, and combinations thereof, wherein R is hydrogen or C₁₋₄ alkyl, and each k is independently 2 to 25.

9. The process of Claim 1 or any other of the preceding claims, wherein said organosilazane or organosilane compound is represented by the following general formula:
A[Q-[Si(Y)₃₋ₙ(R^{1a})ₙ]_{y}]_{z} III
wherein:
A is a z-valent non-polymeric, oligomeric, or polymeric radical selected from oxy; aliphatic, alicyclic, and aromatic hydrocarbyl radicals (optionally containing at least one heteroatom); divalent (imino) and trivalent (nitrilo) amino radicals; siloxanyl radicals; and combinations thereof;
each Q is independently a divalent or trivalent linking group;
each Y is independently hydroxyl, a hydrolyzable group, or a combination thereof;
each R^{1a} is independently a non-hydrolyzable group;
each y is independently an integer of 1 or 2;
z is an integer of 2, 3, or 4; and
each n is independently an integer of 0, 1, 2, or 3.

10. The process of Claim 9, wherein said A is a divalent radical selected from oxy, alkylene, heteroatom-containing alkylene, alkenylene, heteroatom-containing alkenylene, cycloalkylene, heteroatom-containing cycloalkylene, arylene, heteroatom-containing arylene, imino, polydiorganosiloxane, and combinations thereof; each said Q is divalent; each said R^{1a} is independently C₁₋₈ alkyl, phenyl, or a combination thereof; each said n is 0-2 for organosilanes and 3 for organosilazanes; each said y is 1; and/or z is 2.

11. The process of Claim 9 or Claim 10, wherein each said Q independently contains at least one heteroatom selected from sulfur, oxygen, and nitrogen, and/or contains at least one functional group selected from ester (carbonyloxy), amido (carbonylimino), sulfonamido (sulfonylimino), carbonyl, carbonate (oxycarbonyloxy), ureylene (iminocarbonylimino), carbamate (oxycarbonylimino), thio, sulfonyl, sulfinyl, and combinations thereof.

12. The process of Claim 9 or either of Claims 10 and 11, wherein each said Q is independently selected from -C(O)N(R)-(CH₂)ₖ-, -S(O)₂N(R)-(CH₂)ₖ-, -(CH₂)ₖ-, -CH₂O-(CH₂)ₖ-,-C(O)S-(CH₂)ₖ-, -CH₂OC(O)N(R)-(CH₂)ₖ-, 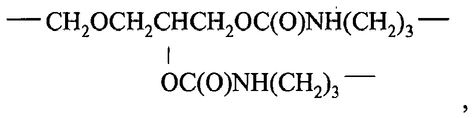 -(CH₂)ₖ-S(O)₂-(CH₂)ₖ-, (CH₂)ₖ-S(O)-(CH₂)ₖ-, -(CH₂)ₖ-S-(CH₂)ₖ-, and combinations thereof, wherein R is hydrogen or C₁₋₄ alkyl, and each k is independently 2 to 25.

13. The process of claim 1, wherein the curable surface treatment composition comprises
(1) at least one polyfluoropolyether silane of the formula C₃F₇O(CF(CF₃)CF₂O)ₙCF(CF₃)-C(O)NH-(CH₂)₃Si(Y)₃, C₃F₇O(CF(CF₃)CF₂O)ₙCF(CF₃)-(CH₂)₃-S-(CH₂)₃Si(Y)₃, or a combination thereof, wherein each Y is independently hydroxyl, a hydrolyzable group, or a combination thereof and n is 3 to 50,
(2) optionally, at least one polyfluoropolyether silane of the formula (Y)₃Si(CH₂)₃-NHC(O)-CF₂O(CF₂O)ₙ(C₂F₄O)_{q}CF₂-C(O)NH-(CH₂)₃Si(Y)₃, (Y)₃Si(CH₂)₃-S-(CH₂)₃-CF₂O(CF₂O)ₙ(C₂F₄O)_{q}CF₂-(CH₂)₃-S-(CH₂)₃Si(Y)₃, or a combination thereof, wherein each Y is independently hydroxyl, a hydrolyzable group, or a combination thereof and n is 1 to 50 and q is 3 to 40, and
(3) at least one organosilane compound comprising (i) a multivalent non-fluorinated segment and (ii) at least two monovalent endgroups, each said monovalent endgroup independently comprising at least one silyl moiety comprising at least one group selected from hydrolyzable groups, hydroxyl, and combinations thereof, and/or at least one organosilazane compound;
(4) an organic solvent comprising a hydrofluoropolyether.

14. An article comprising at least one substrate having at least one major surface, said substrate bearing, on at least a portion of at least one said major surface, a surface treatment prepared by the process of Claim 1 or any other of the preceding claims.

15. A composition comprising
(a) at least one fluorinated organosilane compound comprising (1) a monovalent segment being a polyfluoropolyether and (2) a monovalent endgroup comprising at least one silyl moiety comprising at least one group selected from hydrolyzable groups, hydroxyl, and combinations thereof; and
(b) at least one organosilane compound comprising (1) a multivalent non-fluorinated segment selected from olefinic hydrocarbyl, alicyclic hydrocarbyl, heteroatom-containing hydrocarbyl, siloxanyl, and combinations thereof and (2) at least two monovalent endgroups, each said monovalent endgroup independently comprising at least one silyl moiety comprising at least one group selected from hydrolyzable groups, hydroxyl, and combinations thereof, and/or at least one organosilazane compound; and
(c) an organic solvent comprising a hydrofluoropolyether.

## Patentansprüche

1. Verfahren, das Folgendes umfasst:
(a) das Bereitstellen mindestens eines Substrats mit mindestens einer Hauptoberfläche;
(b) das Bereitstellen einer härtbaren Oberflächenbehandlungszusammensetzung, die Folgendes umfasst:
(1) mindestens eine fluorierte Organosilanverbindung, umfassend (i) ein einwertiges Segment, das ein Polyfluorpolyether ist, und (ii) eine einwertige Endgruppe, umfassend mindestens eine Silyleinheit, die mindestens eine Gruppe umfasst, die ausgewählt ist aus hydrolysierbaren Gruppen, Hydroxyl und Kombinationen davon,
(2) wahlweise mindestens eine fluorierte Organosilanverbindung, umfassend (i) ein mehrwertiges Segment, das ein Polyfluorpolyether ist, und (ii) mindestens zwei einwertige Endgruppen, wobei jede einwertige Endgruppe unabhängig voneinander mindestens eine Silyleinheit umfasst, die mindestens eine Gruppe umfasst, die ausgewählt ist aus hydrolysierbaren Gruppen, Hydroxyl und Kombinationen davon, und
(3) mindestens eine Organosilanverbindung, umfassend (i) ein mehrwertiges nichtfluoriertes Segment und (ii) mindestens zwei einwertige Endgruppen, wobei jede einwertige Endgruppe unabhängig voneinander mindestens eine Silyleinheit umfasst, die mindestens eine Gruppe umfasst, die ausgewählt ist aus Hydroxyl, hydrolysierbaren Gruppen und Kombinationen davon, und/oder mindestens eine Organosilazanverbindung;
(4) mindestens ein organisches Lösemittel, umfassend einen Hydrofluorether; und
(c) das Aufbringen der härtbaren Oberflächenbehandlungszusammensetzung auf wenigstens einen Teil von mindestens einer Hauptoberfläche des Substrats; und
(d) das Aushärten der aufgebrachten härtbaren Oberflächenbehandlungszusammensetzung, um eine Oberflächenbehandlung zu bilden.

2. Verfahren nach Anspruch 1, wobei das mehrwertige nichtfluorierte Segment zweiwertig ist; und/oder wobei das mehrwertige nichtfluorierte Segment ausgewählt ist aus Oxy, Hydrocarbyl, heteroatomhaltigem Hydrocarbyl, Siloxanyl und Kombinationen davon.

3. Verfahren nach Anspruch 1 oder einem anderen der vorstehenden Ansprüche, wobei die fluorierte Organosilanverbindung, die ein einwertiges Segment umfasst, durch die folgende allgemeine Formel dargestellt wird:
R*_{f}*-Q-[C(R)₂-Si(Y)₃₋ₓ(R^{1a})ₓ]_{y} I
worin R*_{f}* ein einwertiges Segment ist, das ein Polyfluorpolyether ist; Q eine zweiwertige oder dreiwertige Verbindungsgruppe ist; jedes R unabhängig voneinander Wasserstoff oder eine C1₋₄-Alkylgruppe ist; jedes Y unabhängig voneinander Hydroxyl, eine hydrolysierbare Gruppe oder eine Kombination davon ist; jedes R^{1a} unabhängig voneinander eine nicht hydrolysierbare Gruppe ist; jedes x unabhängig voneinander eine ganze Zahl von 0, 1 oder 2 ist; und y eine ganze Zahl von 1 oder 2 ist.

4. Verfahren nach Anspruch 3, wobei das R*_{f}* von 4 bis 35 perfluorierte Kohlenstoffatome enthält; das R*_{f}* mindestens eine zweiwertige Hexafluorpropylenoxy-Gruppe (-CF(CF₃)-CF₂O-) enthält; das Q zweiwertig ist; jedes R^{1a} unabhängig voneinander C₁₋₈-Alkyl, Phenyl oder eine Kombination davon ist; jedes R Wasserstoff ist; jedes x 0 ist; und/oder das y 1 ist.

5. Verfahren nach Anspruch 3 oder Anspruch 4, wobei das Rf F[CF(CF3)CF2O]aCF(CF3)- ist, worin a einen Durchschnittswert von 4 bis 20 besitzt.

6. Verfahren nach Anspruch 3 oder Anspruch 4, wobei das R*_{f}* C₃F₇O(CF(CF₃)CF₂O)ₙCF(CF₃)- ist und das Q-C(R)₂-Si(Y)₃₋ₓ(R^{1a})ₓ C(O)NH(CH₂)₃Si(Y)₃, (CH₂)₃-S-(CH₂)₃Si(Y)₃ oder eine Kombination davon ist, wobei n 3 bis 50 ist.

7. Verfahren nach Anspruch 3 oder einem der Ansprüche 4-6, wobei jedes Q unabhängig voneinander mindestens ein Heteroatom enthält, ausgewählt aus Schwefel, Sauerstoff und Stickstoff, und/oder mindestens eine funktionelle Gruppe enthält, ausgewählt aus Ester (Carbonyloxy), Amido (Carbonylimino), Sulfonamido (Sulfonylimino), Carbonyl, Carbonat (Oxycarbonyloxy), Ureylen (Iminocarbonylimino), Carbamat (Oxycarbonylimino), Thio, Sulfonyl, Sulfinyl und Kombinationen davon.

8. Verfahren nach Anspruch 3 oder einem der Ansprüche 4-7, wobei jedes Q unabhängig voneinander ausgewählt ist aus -C(O)N(R)-(CH₂)ₖ-, -S(O)₂N(R)-(CH₂)ₖ-, -(CH₂)ₖ-, -CH₂O-(CH₂)ₖ-, -C(O)S-(CH₂)ₖ-, -CH₂OC(O)N(R)-(CH₂)ₖ-, 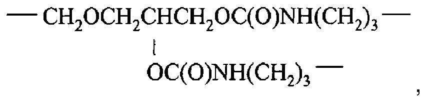 -(CH₂)ₖ-S(O)₂-(CH₂)ₖ-, (CH₂)ₖ-S(O)-(CH₂)ₖ-, -(CH₂)ₖ-S-(CH₂)ₖ- und Kombinationen davon,
worin R Wasserstoff oder C₁₋₄-Alkyl ist und jedes k unabhängig voneinander 2 bis 25 ist.

9. Verfahren nach Anspruch 1 oder einem anderen der vorstehenden Ansprüche, wobei die Organosilazan- oder Organosilanverbindung durch die folgende allgemeine Formel dargestellt wird:
A [Q-[Si(Y)₃₋ₙ(R^{1a})ₙ]_{y}]_{z} III
worin:
A ein z-wertiger nichtpolymerer, oligomerer oder polymerer Rest ist, ausgewählt aus Oxy; aliphatischen, alicyclischen und aromatischen Hydrocarbylresten (wahlweise enthaltend mindestens ein Heteroatom); zweiwertigen (Imino) und dreiwertigen (Nitrilo) Aminoresten; Siloxanylresten; und Kombinationen davon;
jedes Q unabhängig voneinander eine zweiwertige oder dreiwertige Verbindungsgruppe ist;
jedes Y unabhängig voneinander Hydroxyl, eine hydrolysierbare Gruppe oder eine Kombination davon ist;
jedes R^{1a} unabhängig voneinander eine nicht hydrolysierbare Gruppe ist;
jedes y unabhängig voneinander eine ganze Zahl von 1 oder 2 ist;
z eine ganze Zahl von 2, 3 oder 4 ist; und
jedes n unabhängig voneinander eine ganze Zahl von 0, 1, 2 oder 3 ist.

10. Verfahren nach Anspruch 9, wobei das A ein zweiwertiger Rest ist, ausgewählt aus Oxy, Alkylen, heteroatomhaltigem Alkylen, Alkenylen, heteroatomhaltigem Alkenylen, Cycloalkylen, heteroatomhaltigem Cycloalkylen, Arylen, heteroatomhaltigem Arylen, Imino, Polydiorganosiloxan und Kombinationen davon; jedes Q zweiwertig ist; jedes R^{1a} unabhängig voneinander C₁₋₈-Alkyl, Phenyl oder eine Kombination davon ist; jedes n 0-2 für Organosilane und 3 für Organosilazane beträgt; jedes y 1 ist; und/oder z 2 ist.

11. Verfahren nach Anspruch 9 oder Anspruch 10, wobei jedes Q unabhängig voneinander mindestens ein Heteroatom enthält, ausgewählt aus Schwefel, Sauerstoff und Stickstoff, und/oder mindestens eine funktionelle Gruppe enthält, ausgewählt aus Ester (Carbonyloxy), Amido (Carbonylimino), Sulfonamido (Sulfonylimino), Carbonyl, Carbonat (Oxycarbonyloxy), Ureylen (Iminocarbonylimino), Carbamat (Oxycarbonylimino), Thio, Sulfonyl, Sulfinyl und Kombinationen davon.

12. Verfahren nach Anspruch 9 oder einem der Ansprüche 10 und 11, wobei jedes Q unabhängig voneinander ausgewählt ist aus -C(O)N(R)-(CH₂)ₖ-, -S(O)₂N(R)-(CH₂)ₖ-, -(CH₂)ₖ-, -CH₂O-(CH₂)ₖ-, -C(O)S-(CH₂)ₖ-, -CH₂OC(O)N(R)-(CH₂)ₖ-, 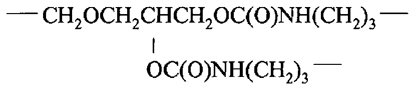 -(CH₂)ₖ-S(O)₂-(CH₂)ₖ-, (CH₂)ₖ-S(O)-(CH₂)ₖ-, -(CH₂)ₖ-S-(CH₂)ₖ- und Kombinationen davon,
worin R Wasserstoff oder C₁₋₄-Alkyl ist und jedes k unabhängig voneinander 2 bis 25 ist.

13. Verfahren nach Anspruch 1, wobei die härtbare Oberflächenbehandlungszusammensetzung Folgendes umfasst:
(1) mindestens ein Polyfluorpolyethersilan der Formel C₃F₇O(CF(CF₃)CF₂O)ₙCF(CF₃)-C(O)NH-(CH₂)₃Si(Y)₃, C₃F₇O(CF(CF₃)CF₂O)ₙCF(CF₃)-(CH₂)₃-S-(CH₂)₃Si(Y)₃ oder eine Kombination davon, worin jedes Y unabhängig voneinander Hydroxyl, eine hydrolysierbare Gruppe oder eine Kombination davon ist und n 3 bis 50 ist,
(2) wahlweise mindestens ein Polyfluorpolyethersilan der Formel (Y)₃Si(CH₂)₃-NHC(O)-CF₂O(CF₂O)ₙ(C₂F₄O)_{q}CF₂-C(O)NH-(CH₂)₃Si(Y)₃, (Y)₃Si(CH₂)₃-S-(CH₂)₃-CF₂O(CF₂O)ₙ(C₂F₄O)_{q}CF₂-(CH₂)₃-S-(CH₂)₃Si(Y)₃ oder eine Kombination davon, worin jedes Y unabhängig voneinander Hydroxyl, eine hydrolysierbare Gruppe oder eine Kombination davon ist und n 1 bis 50 ist und q 3 bis 40 ist, und
(3) mindestens eine Organosilanverbindung, umfassend (i) ein mehrwertiges nichtfluoriertes Segment und (ii) mindestens zwei einwertige Endgruppen, wobei jede einwertige Endgruppe unabhängig voneinander mindestens eine Silyleinheit umfasst, die mindestens eine Gruppe umfasst, die ausgewählt ist aus hydrolysierbaren Gruppen, Hydroxyl und Kombinationen davon, und/oder mindestens eine Organosilazanverbindung;
(4) ein organisches Lösemittel, umfassend einen Hydrofluorpolyether.

14. Artikel, der mindestens ein Substrat mit mindestens einer Hauptoberfläche umfasst, wobei das Substrat auf wenigstens einem Teil von mindestens der einen Hauptoberfläche eine Oberflächenbehandlung trägt, die durch das Verfahren nach Anspruch 1 oder einem anderen der vorstehenden Ansprüche hergestellt wurde.

15. Zusammensetzung, die Folgendes umfasst:
(a) mindestens eine fluorierte Organosilanverbindung, umfassend (1) ein einwertiges Segment, das ein Polyfluorpolyether ist, und (2) eine einwertige Endgruppe, umfassend mindestens eine Silyleinheit, die mindestens eine Gruppe umfasst, die ausgewählt ist aus hydrolysierbaren Gruppen, Hydroxyl und Kombinationen davon; und
(b) mindestens eine Organosilanverbindung, umfassend (1) ein mehrwertiges nichtfluoriertes Segment, ausgewählt aus olefinischem Hydrocarbyl, alicyclischem Hydrocarbyl, heteroatomhaltigem Hydrocarbyl, Siloxanyl und Kombinationen davon, und (2) mindestens zwei einwertige Endgruppen, wobei jede einwertige Endgruppe unabhängig voneinander mindestens eine Silyleinheit umfasst, die mindestens eine Gruppe umfasst, die ausgewählt ist aus hydrolysierbaren Gruppen, Hydroxyl und Kombinationen davon, und/oder mindestens eine Organosilazanverbindung; und
(c) ein organisches Lösemittel, das einen Hydrofluorpolyether umfasst.

## Revendications

1. Procédé comprenant
(a) la fourniture d'au moins un substrat possédant au moins une surface principale ;
(b) la fourniture d'une composition de traitement de surface durcissable comprenant
(1) au moins un composé organosilane fluoré comprenant (i) un segment monovalent qui est un polyfluoropolyéther et (ii) un groupe terminal monovalent comprenant au moins un fragment silyle comprenant au moins un groupe choisi parmi des groupes hydrolysables, un hydroxyle et leurs combinaisons,
(2) facultativement, au moins un composé organosilane fluoré comprenant (i) un segment multivalent qui est un polyfluoropolyéther et (ii) au moins deux groupes terminaux monovalents, chaque groupe terminal monovalent précité comprenant indépendamment au moins un fragment silyle comprenant au moins un groupe choisi parmi des groupes hydrolysables, un hydroxyle et leurs combinaisons, et
(3) au moins un composé organosilane comprenant (i) un segment non fluoré multivalent et (ii) au moins deux groupes terminaux monovalents, chaque groupe terminal monovalent précité comprenant indépendamment au moins un fragment silyle comprenant au moins un groupe choisi parmi hydroxyle, de groupes hydrolysables, et leurs combinaisons, et/ou au moins un composé organosilazane ;
(4) au moins un solvant organique comprenant un hydrofluoroéther ; et
(c) l'application de ladite composition de traitement de surface durcissable sur au moins une partie d'au moins une surface principale dudit substrat ; et
(d) le durcissement de ladite composition de traitement de surface durcissable appliquée de façon à former un traitement de surface

2. Procédé selon la revendication 1, dans lequel ledit segment non fluoré multivalent est divalent ; et/ou dans lequel ledit segment non fluoré multivalent est choisi parmi oxy, hydrocarbyle, hydrocarbyle contenant un hétéroatome, siloxanyle, et leurs combinaisons.

3. Procédé selon la revendication 1 ou l'une quelconque des revendications précédentes, dans lequel ledit composé organosilane fluoré comprenant un segment monovalent est représenté par la formule générale suivante :
R*_{f}-*Q-[C(R)₂-Si(Y)₃₋ₓ(R^{1a})ₓ]_{y} I
dans laquelle R*_{f}* est un segment monovalent qui est un polyfluoropolyéther ; Q est un groupe de liaison divalent ou trivalent ; chaque R est indépendamment un hydrogène ou un groupe alkyle en C₁ à C₄ ; chaque Y est indépendamment un hydroxyle, un groupe hydrolysable, ou une de leurs combinaisons ; chaque R^{1a} est indépendamment un groupe non hydrolysable ; chaque x est indépendamment un nombre entier valant 0, 1 ou 2 ; et y est un nombre entier valant 1 ou 2.

4. Procédé selon la revendication 3, dans lequel ledit R*_{f}* contient de 4 à 35 atomes de carbone perfluorés ; ledit R*_{f}* comprend au moins un groupe hexafluoropropylène-oxy divalent (-CF(CF₃)-CF₂O-) ; ledit Q est divalent ; chaque R^{1a} précité est indépendamment un alkyle en C₁ à C₈, un phényle ou une de leurs combinaisons ; chaque R précité est un hydrogène ; chaque x précité est 0 ; et/ou ledit y vaut 1.

5. Procédé selon la revendication 3 ou la revendication 4, dans lequel ledit Rf est F[CF(CF3)CF2O]aCF(CF3)-, dans lequel a possède une valeur moyenne de 4 à 20.

6. Procédé selon la revendication 3 ou la revendication 4, dans lequel ledit R*_{f}* est C₃F₇O(CF(CF₃)CF₂O)ₙCF(CF₃)-, et ledit Q-C(R)₂-Si(Y)₃₋ₓ(R^{1a})ₓ est C(O)NH(CH₂)₃Si(Y)₃, (CH₂)₃-S-(CH₂)₃Si(Y)₃, ou une de leurs combinaisons, dans lequel n va de 3 à 50.

7. Procédé selon la revendication 3 ou l'une quelconque des revendications 4 à 6, dans lequel chaque Q précité contient indépendamment au moins un hétéroatome choisi parmi soufre, oxygène et azote, et/ou contient au moins un groupe fonctionnel choisi parmi ester (carbonyloxy), amido (carbonylimino), sulfonamido (sulfonylimino), carbonyle, carbonate (oxycarbonyloxy), uréylène (iminocarbonylimino), carbamate (oxycarbonylimino), thio, sulfonyle, sulfinyle et leurs combinaisons.

8. Procédé selon la revendication 3 ou l'une quelconque des revendications 4 à 7, dans lequel chaque Q précité est indépendamment choisi parmi -C(O)N(R)-(CH₂)ₖ-, -S(O)₂N(R)-(CH₂)ₖ-, -(CH₂)ₖ-, -CH₂O-(CH₂)ₖ-, - C(O)S-(CH₂)ₖ-, -CH₂OC(O)N(R)-(CH₂)ₖ-, 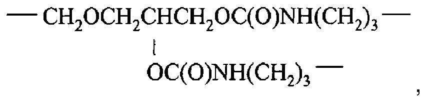 -(CH₂)ₖ-S(O)-(CH₂)ₖ-, (CH₂)ₖ-S(O)-(CH₂)ₖ-, -(CH₂)ₖ-S-(CH₂)ₖ-, et leurs combinaisons,
dans lequel R est un hydrogène ou un alkyle en C₁ à C₄, et chaque k va indépendamment de 2 à 25.

9. Procédé selon la revendication 1 ou l'une quelconque des revendications précédentes, dans lequel ledit composé organosilazane ou organosilane est représenté par la formule générale suivante :
A [Q-[Si(Y)₃₋ₙ(R^{1a})ₙ]_{y}]_{z} III
dans laquelle :
A est radical non polymère, oligomère ou polymère de valence z choisi parmi oxy ; des radicaux hydrocarbyle aliphatiques, alicycliques et aromatiques (contenant éventuellement au moins un hétéroatome) ; des radicaux amino divalents (imino) et trivalents (nitrilo) ; des radicaux siloxanyle ; et leurs combinaisons ;
chaque Q est indépendamment un groupe de liaison divalent ou trivalent ;
chaque Y est indépendamment un hydroxyle, un groupe hydrolysable, ou une de leurs combinaisons ;
chaque R^{1a} est indépendamment un groupe non hydrolysable ;
chaque y est indépendamment un nombre entier valant 1 ou 2 ;
z est un nombre entier valant 2, 3 ou 4 ; et
chaque n est indépendamment un nombre entier valant 0, 1, 2 ou 3.

10. Procédé selon la revendication 9, dans lequel ledit A est un radical divalent choisi parmi oxy, alkylène, alkylène contenant un hétéroatome, alcénylène, alcénylène contenant un hétéroatome, cycloalkylène, cycloalkylène contenant un hétéroatome, arylène, arylène contenant un hétéroatome, imino, polydiorganosiloxane, et leurs combinaisons ; chaque Q précité est divalent ; chaque R^{1a} précité est indépendamment un alkyle en C₁ à C₈, un phényle, ou une de leurs combinaisons ; chaque n précité va de 0 à 2 pour les organosilanes et 3 pour les organosilazanes ; chaque y précité vaut 1 ; et/ou z vaut 2.

11. Procédé selon la revendication 9 ou la revendication 10, dans lequel chaque Q précité contient indépendamment au moins un hétéroatome choisi parmi soufre, oxygène et azote, et/ou contient au moins un groupe fonctionnel choisi parmi ester (carbonyloxy), amido (carbonylimino), sulfonamido (sulfonylimino), carbonyle, carbonate (oxycarbonyloxy), uréylène (iminocarbonylimino), carbamate (oxycarbonylimino), thio, sulfonyle, sulfinyle et leurs combinaisons.

12. Procédé selon la revendication 9 ou l'une ou l'autre des revendications 10 et 11, dans lequel chaque Q précité est indépendamment choisi parmi -C(O)N(R)-(CH₂)ₖ-, -S(O)₂N(R)-(CH₂)ₖ-, -(CH₂)ₖ-, -CH₂O-(CH₂)ₖ-,-C(O)S-(CH₂)ₖ-, -CH₂OC(O)N(R)-(CH₂)ₖ-, 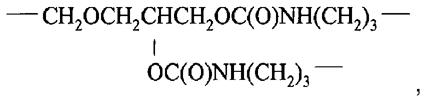 -(CH₂)ₖ-S(O)₂-(CH₂)ₖ-, (CH₂)ₖ-S(O)-(CH₂)ₖ-, -(CH₂)ₖ-S-(CH₂)ₖ-, et leurs combinaisons,
dans lequel R est un hydrogène ou un alkyle en C₁ à C₄, et chaque k va indépendamment de 2 à 25.

13. Procédé selon la revendication 1, dans lequel la composition de traitement de surface durcissable comprend
(1) au moins un polyfluoropolyéther silane de formule C₃F₇O(CF(CF₃)CF₂O)ₙCF(CF₃)-C(O)NH-(CH₂)₃Si(Y)₃ C₃F₇O(CF(CF₃)CF₂O)ₙCF(CF₃)-(CH₂)₃-S-(CH₂)₃Si(Y)₃, ou une de leurs combinaisons, dans lequel chaque Y est indépendamment un hydroxyle, un groupe hydrolysable, ou une de leurs combinaisons et n va de 3 à 50,
(2) facultativement, au moins un polyfluoropolyéther silane de formule (Y)₃Si(CH₂)₃-NHC(O)-CF₂O(CF₂O)ₙ(C₂F₄O)_{q}CF₂-C(O)NH-(CH₂)₃Si(Y)₃, (Y)₃Si(CH₂)s-S-(CH₂)₃-CF₂O(CF₂O)ₙ(C₂F₄O)_{q}CF₂-(CH₂)₃-S-(CH₂)₃Si(Y)₃, ou une de leurs combinaisons, dans lequel chaque Y est indépendamment un hydroxyle, un groupe hydrolysable, ou une de leurs combinaisons et n va de 1 à 50 et q va de 3 à 40, et
(3) au moins un composé organosilane comprenant (i) un segment non fluoré multivalent et (ii) au moins deux groupes terminaux monovalents, chaque groupe terminal monovalent précité comprenant indépendamment au moins un fragment silyle comprenant au moins un groupe choisi parmi des groupes hydrolysables, un hydroxyle, et leurs combinaisons, et/ou au moins un composé organosilazane ;
(4) un solvant organique comprenant un hydrofluoropolyéther.

14. Article comprenant au moins un substrat possédant au moins une surface principale, ledit substrat portant, sur au moins une partie d'au moins une surface principale précitée, un traitement de surface préparé par le procédé selon la revendication 1 ou l'une quelconque des revendications précédentes.

15. Composition comprenant
(a) au moins un composé organosilane fluoré comprenant (1) un segment monovalent qui est un polyfluoropolyéther et (2) un groupe terminal monovalent comprenant au moins un fragment silyle comprenant au moins un groupe choisi parmi des groupes hydrolysables, un hydroxyle, et leurs combinaisons ; et
(b) au moins un composé organosilane comprenant (1) un segment non fluoré multivalent choisi parmi un hydrocarbyle oléfinique, un hydrocarbyle alicyclique, un hydrocarbyle contenant un hétéroatome, un siloxanyle, et leurs combinaisons et (2) au moins deux groupes terminaux monovalents, chaque groupe terminal monovalent précité comprenant indépendamment au moins un fragment silyle comprenant au moins un groupe choisi parmi des groupes hydrolysables, un hydroxyle, et leurs combinaisons, et/ou au moins un composé organosilazane ; et
(c) un solvant organique comprenant un hydrofluoropolyéther.
